# FASCICULE DE BREVET EUROPEEN

(11) **EP 3 361 624 B1**
(45) Date de publication et mention de la délivrance du brevet: **02.12.2020**
(21) Numéro de dépôt: 18154956.9
(22) Date de dépôt: 02.02.2018
(51) Int. Cl.: H02P 21/05, H02P 21/00, F16D 48/06

(54) **PROCEDE DE COMMANDE D'UNE MACHINE ELECTRIQUE TOURNANTE LORS D'UN CHANGEMENT DE MODULATION DE TYPE PLEINE ONDE VERS UNE MODULATION DE LARGEUR D'IMPULSION**
STEUERVERFAHREN EINER ELEKTRISCH UMLAUFENDEN MASCHINE BEI EINEM WECHSEL DER MODULATION VOM TYP VOLLWELLE ZU EINER PULSWEITENMODULATION
METHOD FOR CONTROLLING A ROTARY ELECTRICAL MACHINE DURING A FULL WAVE MODULATION CHANGE TO A PULSE WIDTH MODULATION

(30) Priorité: 09.02.2017 FR 1751077
(43) Date de publication de la demande: 15.08.2018
(73) Titulaire: VALEO EQUIPEMENTS ELECTRIQUES MOTEUR, 94046 Créteil Cedex (FR)
(72) Inventeur: BERNARD, François-Xavier, 94046 Créteil cedex (FR); KONAN, Gilbert, 94046 Créteil cedex (FR); LAUPA, Joachim, 94046 Créteil cedex (FR)

(56) Documents cités:
- JP-A- 2012 244 740
- US-A1- 2009 237 013
- US-A1- 2011 241 584
- US-A1- 2015 096 863

## Description

La présente invention porte sur un procédé de commande d'une machine électrique tournante lors d'un changement de modulation de type pleine onde vers une modulation de largeur d'impulsions. L'invention trouve une application particulièrement avantageuse, mais non exclusive, avec les machines électriques de forte puissance fonctionnant notamment sur l'un des réseaux du véhicule automobile, par exemple le réseau 48 Volts.

Dans certains types de chaînes de traction de véhicule automobile assurant la transmission de la puissance mécanique du moteur thermique vers les roues du véhicule, une machine électrique tournante réversible de forte puissance peut être accouplée à une boîte de vitesses par exemple du type à double embrayages.

La machine électrique est apte à fonctionner dans un mode alternateur pour fournir notamment de l'énergie à la batterie et au réseau de bord du véhicule, et dans un mode moteur, non seulement pour assurer le démarrage du moteur thermique, mais également pour participer à la traction du véhicule seule ou en combinaison avec le moteur thermique. En outre, le pilotage en vitesse de la machine électrique est utilisé notamment pour effectuer une synchronisation entre les pignons des arbres de la boîte de vitesses au moment d'un changement de rapport.

Durant la phase de synchronisation entre deux rapports de vitesse, la machine électrique peut changer de type de modulation. En effet, la machine électrique est commandable suivant un mode dit Pleine Onde (PO) suivant lequel les organes de commutation de l'onduleur de la machine sont commandés par des séquences de signaux carrés délivrés par une unité de commande. L'onduleur peut également être piloté en modulation de largeur d'impulsion, couramment appelée "MLI" ou encore PWM (en anglais "Pulse Width Modulation") pour obtenir un contrôle précis de la machine électrique dans chaque condition particulière de fonctionnement. Des exemples de commandes MLI générées par un microprocesseur sont décrites dans le document FR2895597.

D'autres exemples de l'art antérieur sont décris dans US2015/096863, US2011/241584, JP 2012 244740 et US2009/237013.

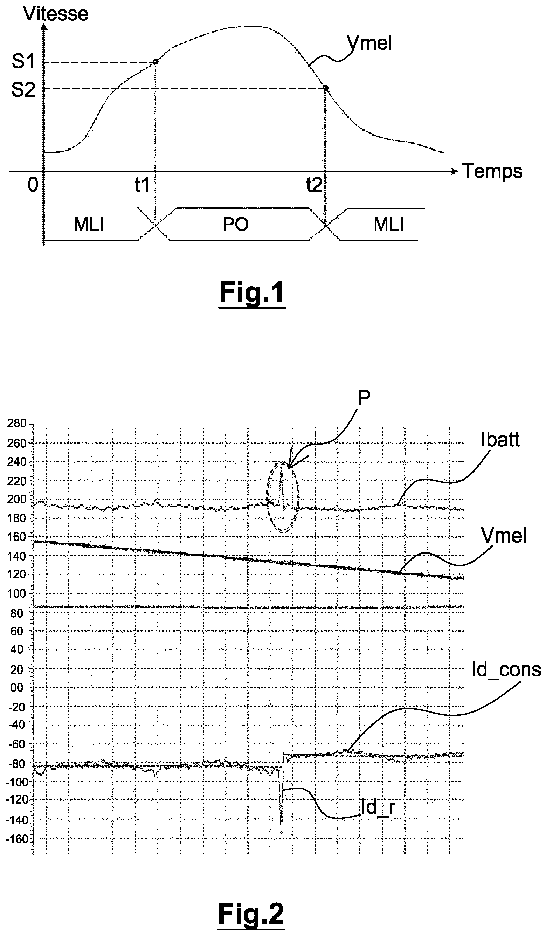

Le changement d'un mode à l'autre dépend notamment de la vitesse de rotation de la machine. La figure 1 illustre ainsi le changement de mode MLI vers Pleine onde lorsque la vitesse de la machine électrique Vmel dépasse un seuil S1 à l'instant t1, ainsi que le changement de mode Pleine Onde vers le mode MLI lorsque la vitesse de la machine électrique passe en dessous d'un seuil S2 à l'instant t2. Les seuils S1 et S2 peuvent être différents pour éviter des changements intempestifs de mode.

Durant une transition d'un mode MLI à pleine onde, les modulations passent de "vectorielle" à "scalaire". La technique utilisée durant cette transition consiste à sur-moduler le vecteur de tension. Pour cela, il faut augmenter progressivement l'amplitude ce vecteur en partant d'une tension ondulable de type MLI jusqu'à une tension ondulable de type pleine onde, tout en maintenant le couple demandé par régulation via le courant en quadrature. Cette transition peut durer entre quelques dizaines et une centaine de millisecondes pour limiter les variations de courants dues à l'augmentation du vecteur. Le choix du gradient de tension peut résulter:
- d'une temporisation: la transition s'effectue alors dans une durée impartie,
- d'un gradient fixe: le gradient de tension étant fixe, la durée de transition peut varier en fonction de la tension de départ,
- ou d'une combinaison des deux critères précités.

En mode Pleine Onde, il n'est pas possible de piloter le vecteur de courant directement, mais une seule de ses composantes. La consigne de courant direct Id calculée en temps réel n'est pas prise en compte lors de cette phase de pilotage. Comme cela est illustré sur la figure 2, au moment du passage de la modulation Pleine Onde vers MLI, le courant direct mesuré ld_r doit converger vers sa consigne Id_cons dans une durée impartie. Pendant cette durée de convergence, la variation non maîtrisée de courant entraîne un pic P du courant continu Ibatt sur le réseau de bord du véhicule qui génère un pic de tension pouvant dépasser les limites autorisées par l'électronique de commande du dispositif de stockage d'énergie du véhicule.

La présente invention vise à remédier efficacement à cet inconvénient en proposant un procédé de commande d'une machine électrique tournante selon la revendication 1.

L'invention permet ainsi de rester dans les limites de tension autorisées par l'électronique de commande du dispositif de stockage d'énergie du véhicule.

Selon une mise en œuvre, la durée de convergence est inférieure à une période de rafraîchissement de la consigne de courant.

Selon une mise en œuvre, la durée de convergence est sensiblement égale ou supérieure à la moitié de la période de rafraîchissement de la consigne de courant.

Selon une mise en œuvre, la durée de convergence est comprise entre 100 microsecondes et 5 millisecondes.

Selon une mise en œuvre, la durée de convergence est de l'ordre de 2.5ms. Selon un autre aspect, l'invention a pour objet un module de contrôle d'une machine électrique tournante comportant une mémoire stockant des instructions logicielles pour la mise en œuvre du procédé tel que précédemment défini.

Selon un autre aspect, l'invention concerne une machine électrique tournante comportant un module de contrôle tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, est une représentation graphique illustrant le changement de type de modulation (pleine onde ou MLI) en fonction de la vitesse de rotation de la machine électrique tournante;
La figure 2, déjà décrite, est une représentation graphique illustrant le pic de courant batterie observable lors d'un changement de modulation de type Pleine Onde vers une modulation de type MLI;
La figure 3 est une représentation schématique d'un ensemble comportant une machine électrique tournante selon l'invention accouplée à une boîte de vitesses à double embrayages;
La figure 4 est une représentation schématique fonctionnelle de la machine électrique tournante mettant en œuvre le procédé de commande selon la présente invention;
La figure 5 est une représentation graphique de l'évolution, en fonction du temps, du courant réel, du courant de pré-défluxage, et du courant de défluxage observables lors du passage d'un mode pleine onde à un mode MLI avec la mise en œuvre de la stratégie de commande selon l'invention;
Les figures 6a et 6b sont des représentations graphiques de l'évolution, en fonction du temps, de la vitesse de rotation, du couple, et du courant de sortie de la machine électrique tournante respectivement lors de la mise en œuvre d'une stratégie selon l'état de la technique et selon l'invention.

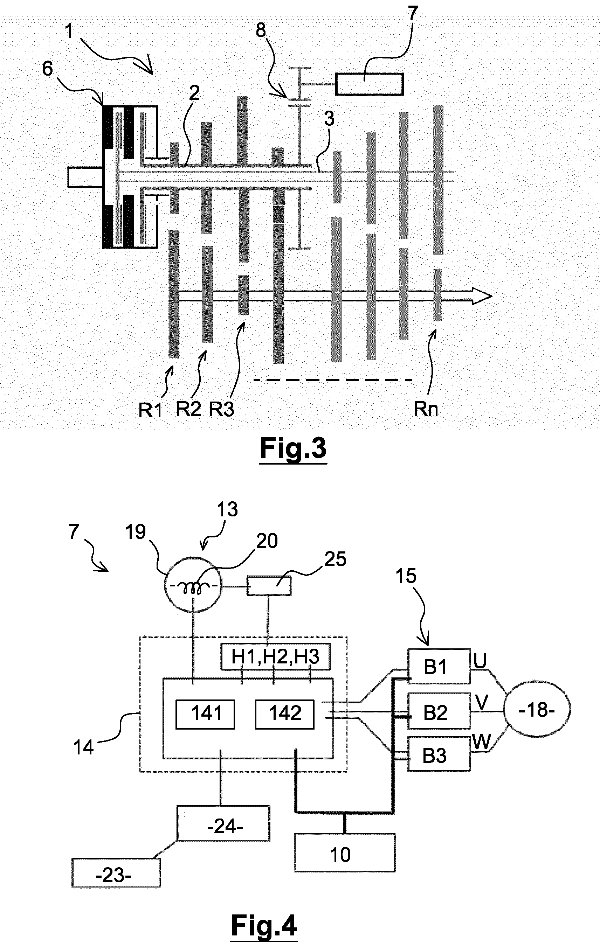

Comme cela est illustré par la figure 3, une boîte de vitesses 1 comporte une pluralité de rapports de vitesse R1-Rn. Un premier arbre 2 est associé à des rapports de vitesse impairs et un deuxième arbre 3 est associé à des rapports de vitesse pairs. Un système à double embrayages 6 permet de lier en rotation ou de libérer ces arbres 2, 3 en fonction du rapport engagé.

Une machine électrique tournante 7 est accouplée à la boîte de vitesses 1 via un réducteur de vitesse 8. La machine électrique 7 pourra être implantée à l'intérieur ou à l'extérieur de la boîte de vitesses 1.

La machine électrique 7 est apte à fonctionner dans un mode alternateur pour fournir notamment de l'énergie à la batterie et au réseau de bord 10 du véhicule, et dans un mode moteur, non seulement pour assurer le démarrage du moteur thermique, mais également pour participer à la traction du véhicule seule ou en combinaison avec le moteur thermique.

Le pilotage en vitesse de la machine électrique 7 est utilisé notamment pour effectuer des synchronisations entre les pignons des arbres 2, 3 de la boîte de vitesses 1 au moment d'un changement de rapport de vitesse R1-Rn.

Plus précisément, comme cela est représenté sur la figure 4, la machine électrique 7 est connectée au réseau de bord 10. Le réseau de bord 10 présente de préférence une tension de 48V. En variante, le réseau de bord 10 présente une tension de 12V ou 24V.

L'alterno-démarreur 7 comprend notamment une partie électromécanique 13, un module de contrôle 14, et un onduleur 15. La partie électromécanique 13 comprend un élément induit 18, et un élément inducteur 19. Dans un exemple, l'induit 18 est le stator, et l'inducteur 19 est un rotor comportant une bobine d'excitation 20. Le stator 18 comprend un nombre N quelconque de phases. Les phases du stator 18 pourront être couplées en triangle ou en étoile. Une combinaison de couplage triangle et étoile est également envisageable.

Le module de contrôle 14 comprend un circuit d'excitation 141 connu en soi générant un courant d'excitation qui est injecté dans la bobine d'excitation 20.

Le module de contrôle 14 comprend en outre un circuit de contrôle 142, comprenant par exemple un microcontrôleur, qui pilote l'onduleur 15 en fonction d'un signal de commande issu du calculateur moteur 23 et reçu via un connecteur de signal 24. Le module de contrôle 14 comporte une mémoire stockant des instructions logicielles pour la mise en œuvre du procédé de commande de la machine électrique 7 décrit ci-après.

L'onduleur 15 comporte une pluralité de bras B1, B2, B3 ayant chacun deux organes de commutation, par exemple des transistors de type MOS, pour relier les phases u, v, w à un potentiel positif du réseau de bord 10 ou à la masse en fonction de la position angulaire du rotor 19.

La mesure de la position angulaire ainsi que la mesure de la vitesse angulaire du rotor 19 pourront être réalisées au moyen de capteurs analogiques à effet hall H1, H2, H3 et d'une cible magnétique 25 associée qui est solidaire en rotation du rotor 19.

Durant la phase de synchronisation entre deux rapports de vitesse, la machine électrique tournante 7 peut changer de type de modulation. En effet, la machine électrique 7 est commandable suivant un mode dit Pleine Onde (PO) suivant lequel les organes de commutation de l'onduleur 15 de la machine sont commandés par des séquences de signaux carrés délivrés par une unité de commande. L'onduleur 15 peut également être piloté en modulation de largeur d'impulsion, couramment appelée "MLI" ou encore PWM (en anglais "Pulse Width Modulation") pour obtenir un contrôle précis de la machine électrique 7 dans chaque condition particulière de fonctionnement. Des exemples de commandes MLI générées par un microprocesseur sont décrites dans le document FR2895597.

Le procédé selon l'invention comporte une étape de commande visant à limiter les variations d'un courant Idc de sortie de l'onduleur 15 durant la phase de changement de type de modulation (pleine onde vers MLI) sans compensation de variations de couple.

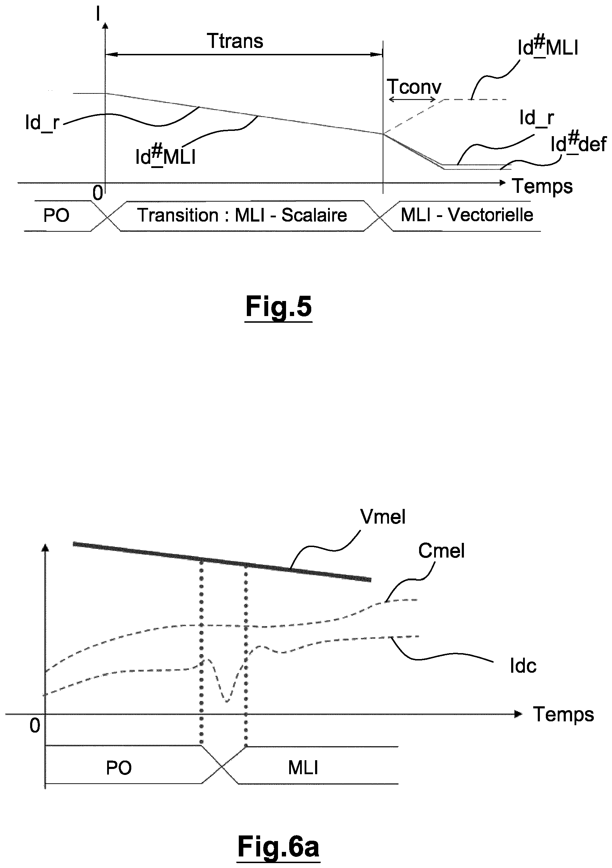

A cet effet, comme cela est illustré par la figure 5, le module de contrôle 14 commande l'application, pendant une période de transition Ttrans entre les deux modes, d'une consigne de courant de pré-défluxage Id#_MLI égale à une mesure de courant d'axe direct Id_r. Ensuite, on observe une convergence vers la consigne de pré-défluxage Id#_MLI sur une durée de convergence Tconv. Une fois la transition passée, la boucle de défluxage de consigne Id#_def assure le maintien en tension.

On rappelle ici que la consigne de pré-défluxage Id#_MLI est une consigne de courant d'axe direct correspondant à un point de fonctionnement de la machine électrique 7 pour une modélisation donnée. La consigne de défluxage Id#_def correspond à la consigne de courant d'axe direct à laquelle est ajoutée une variation de courant prenant en compte des erreurs de modélisation ainsi que des erreurs physiques liées au fonctionnement de la machine électrique tournante 7.

La durée de convergence Tconv est inférieure à une période de rafraîchissement de la consigne de courant d'axe direct Id#_MLI. La durée de convergence Tconv est sensiblement égale ou supérieure à la moitié de la période de rafraîchissement de la consigne de courant d'axe direct Id#_MLI. La durée de convergence Tconv est comprise entre 100 microsecondes et 5 millisecondes, et est de préférence de l'ordre de 2.5ms.

Ainsi, en mode pleine onde, ni la consigne de courant direct, ni la boucle de défluxage ne sont utilisées car le courant dans cet axe est la conséquence du vecteur de tension.

Durant la transition du mode pleine onde vers le mode MLI-Scalaire, le courant de défluxage Id#_def est encore fixé par le vecteur de tension. Au fur est à mesure que la tension ondulable diminue, le courant de défluxage augmente. Durant cette phase qui s'étend sur la durée Trans, la consigne de Id#_MLI pourra être considérée comme égale à la mesure Id_r.

A la fin de cette transition, c'est-à-dire au moment du passage d'une commande de type scalaire vers une commande de type vectorielle, il est nécessaire que la mesure du courant Id_r soit proche de la consigne afin que la convergence se fasse rapidement.

Le retour dans un mode MLI vectoriel se passe de façon souple, dans la mesure où le point final de la MLI Scalaire et celui de la MLI vectorielle doivent être relativement proche l'un de l'autre. A cet effet, la consigne de pré-défluxage Id#MLI, qui était égale à la mesure, juste avant le changement de modulation converge sur la période Tconv inférieure à sa période de rafraichissement.

Comme cela est illustré sur la figure 6a, le changement de mode pleine onde vers MLI réalisé à couple Cmel constant dans les stratégies de commande connues engendre des variations de courant Idc en sortie de l'onduleur 15 connecté à la machine électrique 7 et donc des variations de tension aux bornes de la batterie.

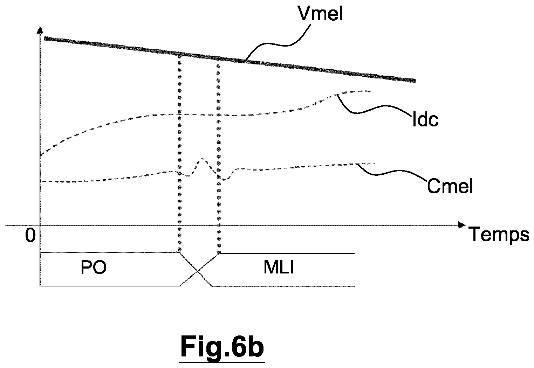

Comme cela est illustré sur la figure 6b, le pilotage de la machine électrique 7 suivant la stratégie selon l'invention engendre des variations de couple faibles Cmel mais permet, en maintenant le courant Idc sensiblement constant, d'atténuer les dépassements de courant susceptibles de nuire au fonctionnement du dispositif de stockage d'énergie du véhicule.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres, l'invention étant définie seulement par les revendications indépendantes .

## Revendications

1. Procédé de commande d'une machine électrique tournante (7) coopérant avec une boîte de vitesses (1) de véhicule automobile, **caractérisé en ce que**, au cours d'une phase de synchronisation entre deux rapports de vitesse (R1-Rn) pendant laquelle la machine électrique tournante (7) est pilotée en vitesse et change de type de modulation pour passer d'une modulation de type pleine onde (PO) vers une modulation de largeur d'impulsion (MLI), ledit procédé comporte une étape de commande visant à limiter les variations de la composante d'axe direct d'un courant (Idc) de sortie d'un onduleur (15) durant la phase de changement de type de modulation sans compensation de variations de couple, ledit procédé comportant :
- une étape d'application, pendant une période de transition (Ttrans), d'une consigne de courant de pré-défluxage (Id#_MLI) égale à une mesure de courant d'axe direct (Id_r), la consigne de pré-défluxage (Id#_MLI) étant une consigne de courant d'axe direct correspondant à un point de fonctionnement de la machine électrique (7) pour une modélisation donnée, et
- une étape de convergence vers une consigne de courant de pré-défluxage (Id#_MLI) sur une durée de convergence (Tconv).

2. Procédé selon la revendication 1, **caractérisé en ce que** la durée de convergence (Tconv) est inférieure à une période de rafraîchissement de la consigne de courant (Id#_MLI).

3. Procédé selon la revendication 2, **caractérisé en ce que** la durée de convergence (Tconv) est sensiblement égale ou supérieure à la moitié de la période de rafraîchissement de la consigne de courant (Id#_MLI).

4. Procéde selon l'une quelconque des revendications 1 à 3, **caractérisé en ce que** la durée de convergence (Tconv) est comprise entre 100 microsecondes et 5 millisecondes.

5. Procédé selon la revendication 4, **caractérisé en ce que** la durée de convergence (Tconv) est de l'ordre de 2.5ms.

6. Module de contrôle (14) d'une machine électrique tournante (7) comportant une mémoire stockant des instructions logicielles pour la mise en œuvre du procédé tel que défini selon l'une quelconque des revendications 1 à 5.

7. Machine électrique tournante comportant un module de contrôle tel que défini selon la revendication 6.

## Patentansprüche

1. Verfahren zur Steuerung einer umlaufenden elektrischen Maschine (7), die mit einem Schaltgetriebe (1) eines Kraftfahrzeugs zusammenwirkt, **dadurch gekennzeichnet, dass** während einer Synchronisationsphase zwischen zwei Gängen (R1-Rn), während der die umlaufende elektrische Maschine (7) geschwindigkeitsgesteuert wird und die Modulationsart ändert, um von einer Modulation der Art Vollwelle (PO) zu einer Impulsbreitenmodulation (MLI) überzugehen, das Verfahren einen Steuerschritt aufweist, der darauf abzielt, die Schwankungen der Längskomponente eines Ausgangsstroms (Idc) eines Wechselrichters (15) während der Änderungsphase der Modulationsart ohne Kompensation von Drehmomentschwankungen zu begrenzen, wobei das Verfahren aufweist:
- einen Schritt der Anwendung, während einer Übergangsperiode (Ttrans), eines Vor-Feldschwächung-Stromsollwerts (Id#_MLI) gleich einem Längsstrommesswert (Id_r), wobei der Vor-Feldschwächung-Sollwert (Id#_MLI) ein Längsstromsollwert ist, der einem Betriebspunkt der elektrischen Maschine (7) für eine gegebene Modellierung entspricht, und
- einen Schritt der Konvergenz zu einem Vor-Feldschwächung-Stromsollwert (Id#_MLI) über eine Konvergenzdauer (Tconv).

2. Verfahren nach Anspruch 1, **dadurch gekennzeichnet, dass** die Konvergenzdauer (Tconv) geringer als eine Auffrischungsperiode des Stromsollwerts (Id#_MLI) ist.

3. Verfahren nach Anspruch 2, **dadurch gekennzeichnet, dass** die Konvergenzdauer (Tconv) im Wesentlichen gleich der oder größer als die Hälfte der Auffrischungsperiode des Stromsollwerts (Id#_MLI) ist.

4. Verfahren nach einem der Ansprüche 1 bis 3, **dadurch gekennzeichnet, dass** die Konvergenzdauer (Tconv) zwischen 100 Mikrosekunden und 5 Millisekunden liegt.

5. Verfahren nach Anspruch 4, **dadurch gekennzeichnet, dass** die Konvergenzdauer (Tconv) in der Größenordnung von 2,5 ms liegt.

6. Kontrollmodul (14) einer umlaufenden elektrischen Maschine (7), das einen Speicher aufweist, der Softwareanweisungen zur Durchführung des wie in einem der Ansprüche 1 bis 5 definierten Verfahrens speichert.

7. Umlaufende elektrische Maschine, die ein wie gemäß Anspruch 6 definiertes Kontrollmodul aufweist.

## Claims

1. Method for controlling a rotary electric machine (7) collaborating with a gearbox (1) of a motor vehicle, **characterized in that**, during a phase of synchronization between two gear ratios (R1-Rn) during which the rotary electric machine (7) is controlled in terms of speed and changes type of modulation to switch from full wave (FW) modulation to pulse width modulation (PWM), the said method comprises a control step aimed at limiting the variations of the direct-axis component of an output current (Idc) of an invertor (15) during the phase of change of type of modulation without compensation for variations in torque, the said method comprising:
- a step of applying, for a transition period (Ttrans) a pre-defluxing current setpoint (Id#_PWM) equal to a measurement of the direct axis current (Id_r), the pre-defluxing setpoint (Id#_PWM) being a direct-axis current setpoint corresponding to an operating point of the electric machine (7) for a given modelling, and
- a step of converging towards a pre-defluxing current setpoint (Id#_PWM) over a convergence during (Tconv).

2. Method according to Claim 1, **characterized in that** the convergence duration (Tconv) is shorter than a refresh period for the current setpoint (Id#_PWM).

3. Method according to Claim 2, **characterized in that** the convergence duration (Tconv) is substantially equal to or greater than half the refresh period for the current setpoint (Id#_PWM).

4. Method according to any one of Claims 1 to 3, **characterized in that** the convergence duration (Tconv) is comprised between 100 microseconds and 5 milliseconds.

5. Method according to Claim 4, **characterized in that** the convergence duration (Tconv) is of the order of 2.5 ms.

6. Control module (14) for a rotary electric machine (7) comprising a memory storing software instructions for implementing the method as defined in any one of Claims 1 to 5.

7. Rotary electric machine comprising a control module as defined in Claim 6.
